# EUROPEAN PATENT APPLICATION

(11) **EP 4 727 215 A1**
(43) Date of publication of application: **15.04.2026**
(21) Application number: 24819202.3
(22) Date of filing: 27.05.2024
(51) Int. Cl.: H04W 48/06, H04W 24/08, H04W 28/10

(54) **COMMUNICATION CONTROL DEVICE, COMMUNICATION CONTROL METHOD, AND PROGRAM**

(30) Priority: 06.06.2023 JP 2023092986; 20.12.2023 JP 2023214758; 26.12.2023 JP 2023219604
(71) Applicant: SoftBank Group Corp., Tokyo 105-7537 (JP)
(72) Inventor: SON, Masayoshi, Tokyo 105-7537 (JP)
(74) Representative: Meissner Bolte Partnerschaft mbB
(86) International application number: PCT/JP2024/019375
(87) International publication number: WO 2024/252970

(57) **Abstract**

Provided is a technique for enabling more appropriate control of a communication speed in a congestion area. Provided is a communication control device including: an acquisition unit configured to acquire traffic data of wireless communication; a detection unit configured to detect an area where the wireless communication is congested based on the traffic data; and a control unit configured to set an upper limit of a communication speed for a terminal located in the area where the wireless communication is congested during a period of time in which the wireless communication is congested.

## Description

### Cross-Reference to Related Applications

The present application is based on Japanese Patent Application No. 2023-092986 filed on June 6, 2023, Japanese Patent Application No. 2023-214758 filed on December 20, 2023, and Japanese Patent Application No. 2023-219604 filed on December 26, 2023, the contents of which are incorporated herein by reference.

### Technical Field

The present invention relates to a communication control device, a communication control method, and a program.

### Background Art

At present, various wireless communication carriers including mobile network operators (MNOs) and mobile virtual network operators (MVNOs) provide various wireless communication services. For example, Patent Literature 1 discloses a technique for switching a profile automatically in accordance with a communication status of a mobile phone network.

### Citation List

### Patent Literature

Patent Literature 1: JP 7284881 B1

### Summary of Invention

Radio waves that are finite resources are used in wireless communication. Thus, when a large number of terminals perform communication at the same time in the same area, a communication speed per terminal decreases.

Accordingly, an object of the present invention is to provide a technique capable of controlling a communication speed more appropriately in a congestion area.

According to an aspect of the present invention, a communication control device includes: an acquisition unit configured to acquire traffic data of wireless communication; a detection unit configured to detect an area where the wireless communication is congested based on the traffic data; and a control unit configured to set an upper limit of a communication speed for a terminal located in the area where the wireless communication is congested during a period of time in which the wireless communication is congested.

According to the present invention, it is possible to provide a technique capable of controlling a communication speed more appropriately in a congestion area.

### Brief Description of Drawings

[Figure 1] Fig. 1 is a diagram illustrating an example of a wireless communication system according to a first embodiment.
[Figure 2] Fig. 2 is a diagram illustrating a hardware configuration example of a communication control device.
[Figure 3] Fig. 3 is a diagram illustrating a functional block configuration example of the communication control device.
[Figure 4] Fig. 4 is a flowchart illustrating an example of a processing procedure executed by the communication control device.
[Figure 5] Fig. 5 is a diagram illustrating a functional block configuration example of a communication control device according to a second embodiment.
[Figure 6A] Fig. 6A is a diagram illustrating an example of a determination condition.
[Figure 6B] Fig. 6B is a diagram illustrating an example of the determination condition.
[Figure 7] Fig. 7 is a diagram illustrating an example of a color map.
[Figure 8] Fig. 8 is a flowchart illustrating an example of a processing procedure executed by the communication control device.
[Figure 9] Fig. 9 is a diagram illustrating a functional block configuration example of a communication control device according to a third embodiment.
[Figure 10] Fig. 10 is a flowchart illustrating an example of a processing procedure executed by the communication control device.

### Description of Embodiments

Embodiments of the present invention will be described with reference to the accompanying drawings. In each drawing, constituents denoted by the same reference numeral have the same or similar configuration.

### (1) First Embodiment

### <System Configuration>

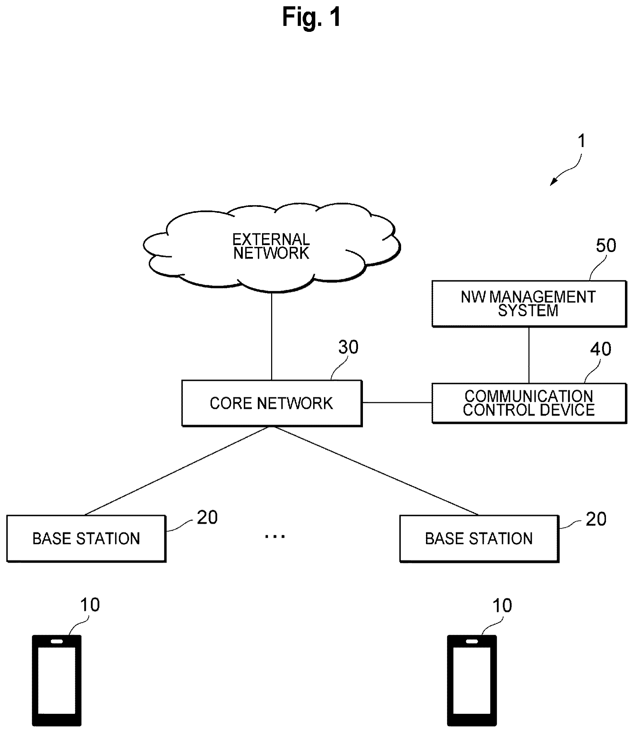

Fig. 1 is a diagram illustrating an example of a wireless communication system 1 according to the present embodiment. The wireless communication system 1 is a system that provides a wireless communication service to a terminal 10 and includes one or more base stations 20, a core network 30, a communication control device 40, and an NW management system 50. The wireless communication system 1 may be compatible with, for example, 3G, long term evolution (LTE), 5G, and 6G or later wireless communication techniques defined in the third generation partnership project (3GPP).

The terminal 10 is, for example, a smartphone, a mobile phone, a personal computer, an in-vehicle terminal, an in-vehicle device, a telematics control unit (TCU), or the like. The terminal 10 may be referred to as user equipment (UE).

The base station 20 includes an antenna and forms one or more cells. The base station 20 may be referred to as a NodeB (NB), an enhanced NodeB (eNB), a gNodeB (gNB), or the like.

The core network 30 is a device that is connected to an external network and performs management of a position at which there is the terminal 10, routing control of data flowing between the terminal 10 and the external network, quality of service (QoS) control, management of contract information of a user, and the like. The core network 30 may include a plurality of physical device groups or may include a plurality of logical function groups. The external network includes the Internet and an intra-company network.

The communication control device 40 controls a communication speed of the terminal 10 based on a congestion status of an area, the contract information of the user, load statuses of the base station 20 and the core network 30, and the like. In the example of Fig. 1, the communication control device 40 is illustrated as being separate from the core network 30, but the present embodiment is not limited to the mode. The communication control device 40 may be a device different from the core network 30 or may be a part of the core network 30. When the communication control device 40 is a part of the core network 30, the communication control device 40 may be a packet data network gateway (PGW) or a user plane function (UPF) defined by the 3GPP.

The NW management system 50 monitors states of the base station 20 and the core network 30 and performs various types of control on the base station 20 and the core network 30. For example, the NW management system 50 may manage the past and current traffic data in units of cells, units of base stations 20, and units of core networks 30 (more specifically, in units of PGWs and units of UPFs).

### <Hardware Configuration>

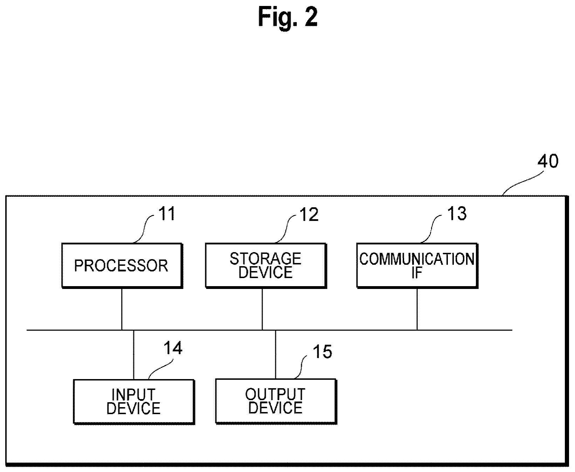

Fig. 2 is a diagram illustrating a hardware configuration example of the communication control device 40. The communication control device 40 includes a processor 11 such as a central processing unit (CPU) and a graphical processing unit (GPU), a storage device 12 such as a memory (for example, a random access memory (RAM) or a read only memory (ROM)), a hard disk drive (HDD), and/or a solid state drive (SSD), a network interface (IF) 13 that performs wired or wireless communication, an input device 14 that receives an input operation, and an output device 15 that outputs information. The input device 14 is, for example, a keyboard, a touch panel, a mouse, and/or a microphone. The output device 15 is, for example, a display, a touch panel, and/or a speaker.

### <Functional Block Configuration>

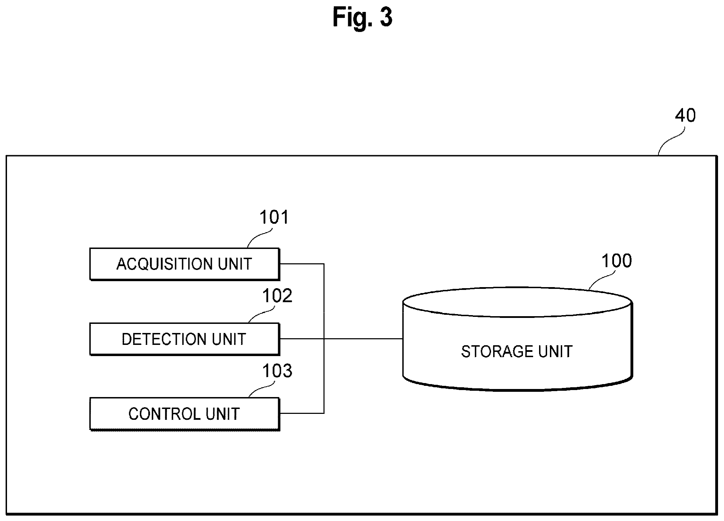

Fig. 3 is a diagram illustrating a functional block configuration example of the communication control device 40. The communication control device 40 includes a storage unit 100, an acquisition unit 101, a detection unit 102, and a control unit 103. The storage unit 100 can be implemented using the storage device 12 included in the communication control device 40. The acquisition unit 101, the detection unit 102, and the control unit 103 can be implemented by causing the processor 11 of the communication control device 40 to execute a program stored in the storage device 12. The program can be stored in a storage medium. The storage medium that stores the program may be a non-transitory computer readable medium. The non-transitory storage medium is not particularly limited, and may be, for example, a storage medium such as a universal serial bus (USB) memory or a compact disc read-only memory (CD-ROM).

The storage unit 100 stores various types of data acquired by the acquisition unit 101.

The acquisition unit 101 acquires traffic data regarding a congestion status of wireless communication from the base station 20, the core network 30, and/or the NW management system 50.

The detection unit 102 detects an area where wireless communication is congested (hereinafter referred to as a "congestion area") based on the traffic data acquired by the acquisition unit 101. For example, the detection unit 102 may detect a current congestion area in real time based on latest traffic data acquired by the acquisition unit 101. That is, the detection unit 102 may detect a current congestion area.

The detection unit 102 may detect a congestion area and a period of time in which wireless communication is congested (hereinafter referred to as "congestion period of time") based on the traffic data acquired by the acquisition unit 101. That is, the detection unit 102 may detect an area and a period of time considered to be congested in the future from a tendency of past and/or latest traffic data.

The control unit 103 sets an upper limit of the communication speed for the terminal 10 located in the congestion area during the congestion period of time. For example, when the detection unit 102 detects the current congestion area in real time, the control unit 103 sets the upper limit of the communication speed for the terminal 10 located in the congestion area during the time period in which the detection unit 102 detects that the congestion area is congested. On the other hand, when the detection unit 102 predicts a future congestion period of time, the control unit 103 sets the upper limit of the communication speed for the terminal 10 located in the congestion area during the detected congestion period of time.

### <Processing Procedure>

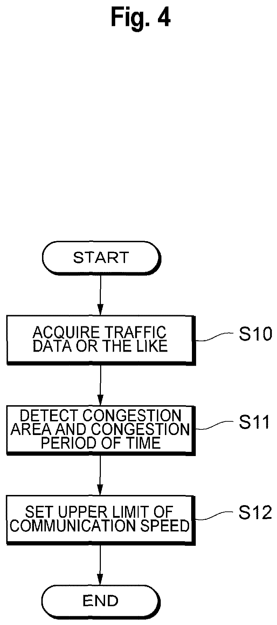

Fig. 4 is a flowchart illustrating an example of a processing procedure executed by the communication control device 40.

In step S10, the acquisition unit 101 acquires traffic data from the core network 30 or the NW management system 50. The traffic data may be data indicating a time transition, that is, a traffic amount from the past to the present at a predetermined interval (for example, every minute or the like). The traffic data may be, for example, data indicating a traffic amount (for example, an uplink data amount and/or a downlink data amount) for each wireless communication area (for example, a cell), data indicating a traffic amount for each base station 20, data indicating the number of terminals 10 locating (existing) in a wireless communication area, data indicating a time transition of an average traffic amount (for example, an average communication speed of uplink data and downlink data) of a plurality of terminals 10 located in the same wireless communication area, and/or data indicating a processing load (a CPU usage rate, a memory usage rate, or the like) of the base station 20. The uplink data means data flowing from the terminal 10 toward the external network, and the downlink data means data flowing from the external network toward the terminal 10.

The acquisition unit 101 may acquire data regarding the regional attribute (hereinafter referred to as "regional attribute data") of the wireless communication area. Examples of the regional attribute include an area around a station, a residential area, an area where there is a shopping center, an area where there are many companies, and an area where a festival is held. The acquisition unit 101 may acquire weather prediction data, event occurrence schedule data, and/or people flow prediction data. The weather prediction data may be, for example, weather forecast. The event occurrence schedule data indicates a date and time and a place of an event to be held in the future. The people flow prediction data is data obtained by predicting a state in which a people flow changes over time.

In step S11, the detection unit 102 detects a congestion area and a congestion period of time from the traffic data or the like acquired in step S10.

For example, the detection unit 102 may detect a wireless communication area of which a traffic amount from a predetermined period ago (although not particularly limited, for example, 10 minutes before) to the present is a predetermined threshold or more as a congestion area. For example, the detection unit 102 may detect a wireless communication area where an average communication speed of each terminal 10 of all the terminals 10 located in the same wireless communication area is a predetermined threshold or less as a congestion area. Units of the congestion areas detected by the detection unit 102 may be units of cells or a unit including a plurality of cells (for example, units of prefectures and/or units of municipalities).

The detection unit 102 may detect a congestion area and a congestion period of time based on the regional attribute data and the traffic data of the wireless communication area acquired by the acquisition unit 101. For example, it is assumed that there is a tendency that a traffic amount from 17:00 to 19:00 of a cell in which there is a shopping center A is twice a traffic amount from 14:00 to 15:00. In this case, the shopping center A is in an area A. When a traffic amount of the area A at the current time (15:00) is taken into account, the traffic amount between 17:00 and 19:00 in the evening exceeds a predetermined threshold. Therefore, the detection unit 102 may determine that the area A corresponds to a congestion area between 17:00 and 19:00.

The detection unit 102 may estimate a congestion area and a congestion period of time based on at least one of the weather prediction data, the event occurrence schedule data, and the people flow prediction data acquired by the acquisition unit 101, and the traffic data. For example, the traffic amount of the area A is normally less than the predetermined threshold, but the detection unit 102 may determine that the area A from 17:00 to 18:00 corresponds to a congestion area in consideration of an event that is held from 17:00 to 18:00. It is assumed that the traffic amount of the area A is normally less than the predetermined threshold, but the number of people is expected to increase in the area A between 9:00 PM on December 31 and 3:00 AM on January 1 in accordance with the people flow prediction data. In this case, the detection unit 102 may determine that the area A from 9:00 PM on December 31 to 3:00 AM on January 1 corresponds to a congestion area.

The detection unit 102 may detect the degree of congestion (congestion level) in a congestion area at a plurality of levels for each congestion area. For example, it is assumed that the degree of congestion is 1 when a traffic amount is A or more and less than B, the degree of congestion is 2 when the traffic amount is B or more and less than C, the degree of congestion is 3 when the traffic amount is C or more and less than D, and the degree of congestion is 4 when the traffic amount is D or more. In this case, when the traffic amount of the area A is B or more and C or more, the detection unit 102 may determine that the area A is a congestion area and the congestion degree is 2.

The detection unit 102 may display the estimated congestion area on a display or the like using a color map or the like.

In step S12, while the current time corresponds to the congestion period of time estimated in step S11, the control unit 103 sets the upper limit of the communication speed for the terminal 10 located in the congestion area estimated in step S11. For example, when the detection unit 102 predicts that a mixed period of time in the congestion area A is from 10:00 to 12:00, the control unit 103 sets the upper limit of the communication speed for the terminal 10 located in the congestion area A from 10:00 to 12:00.

When the detection unit 102 detects a congestion area in real time, the control unit 103 sets the upper limit of the communication speed for the terminal 10 located in the congestion area while the detection unit 102 detects that the area is congested. For example, while the detection unit 102 determines that an area B corresponds to a congestion area, the control unit 103 continues to set the upper limit of the communication speed for the terminal 10 located in the area B. When the detection unit 102 determines that the area B no longer corresponds to the congestion area, the setting of the upper limit of the communication speed is released.

The upper limit of the communication speed set by the control unit 103 is set to a value lower than a communication speed in a non-congestion area (for example, about 75 Mbps to 100 Mbps in the case of LTE), such as 1 Mbps, 3 Mbps, 5 Mbps, or 10 Mbps.

The control unit 103 may change the upper limit of the communication speed in accordance with the degree of congestion in the congestion area. In this case, the control unit 103 may set the upper limit of the communication speed for the terminal 10 located in the congestion area in accordance with the upper limit of the communication speed set in advance in accordance with the degree of congestion in the congestion area. For example, it is assumed that an upper limit of a communication speed corresponding to the degree of congestion of 1 is set to 10 Mbps, an upper limit of a communication speed corresponding to the degree of congestion of 2 is set to 5 Mbps, and an upper limit of a communication speed corresponding to the degree of congestion of 3 is set to 1 Mbps. In this case, the control unit 103 may set the upper limit of the communication speed to 5 Mbps for the terminal 10 located in a congestion area of which the congestion degree is 2, and may set the upper limit of the communication speed to 10 Mbps for the terminal 10 located in the congestion area of which the congestion degree is 1.

The control unit 103 may set the upper limit of the communication speed to the same value for the terminals 10 located in the congestion area regardless of a contract conditions of users who use the terminals 10. For example, the control unit 103 may set the upper limit of the communication speed to the same value for the terminal 10 of a fee plan in which a data amount can be used without limitation and the terminal 10 of a fee plan in which the upper limit is set to an available data amount.

The control unit 103 may set the upper limit of the communication speed in accordance with a regional attribute of the area where the terminal 10 is located for the terminal 10 located in the congestion area during the congestion period of time. For example, the control unit 103 may set the upper limit of the communication speed to a different value in accordance with the regional attribute, such as an area around a station, an area where there is a shopping mall, an area where a concert is held, and an area where a beer festival is held. As an example, the control unit 103 may set the upper limit of the communication speed in accordance with the regional attribute, such as setting of the upper limit of the communication speed to 10 Mbps since it is expected that there are many users viewing moving images around a station, and setting of the upper limit of the communication speed to 1 Mbps since it is expected that the number of users is large but a data usage amount per user is not large in a beer festival venue.

The control unit 103 may set the upper limit of the communication speed in accordance with a data type received or transmitted by the terminal 10 during the congestion period of time for the terminal 10 located in the congestion area. That is, the upper limit of the communication speed may be set for each terminal 10 in accordance with content of data to be communicated. Examples of the data type include moving image data, music data, web data, SNS data, and data of a specific application.

For example, when a moving image has an intermediate image quality, a data amount is 5 Mbyte per minute. Therefore, theoretically, a communication speed of 83 kbps is sufficient. Therefore, the control unit 103 may set the upper limit of the communication speed to 3 Mbps for the terminal 10 of a user viewing an intermediate moving image. On the other hand, the upper limit of the communication speed may be set to 10 Mbps for the terminal 10 of a user performing a television conference with a large number of people so that the television conference is stabilized. The upper limit of the communication speed may be set to 1 Mbps for the terminal 10 of a user who is simply performing web browsing. The upper limit of the communication speed may be set to 3 Mbps for the terminal 10 of a user using a map application in order to smoothly update a map.

The control unit 103 may set the upper limit of the communication speed corresponding to a communication carrier making a contract with the terminal 10 during a congestion period of time for the terminal 10 located in the congestion area. Here, it is assumed that there are a plurality of communication carriers A and B using the same wireless communication system 1. In this case, the control unit 103 may set the upper limit of the communication speed to 1 Mbps for the terminal 10 of a user who makes a contract with the communication carrier A, and may set the upper limit of the communication speed to 5 Mbps for the terminal 10 of a user who makes a contract with the communication carrier B.

The control unit 103 may arbitrarily combine the communication speed control methods described above. For example, the control unit 103 may set 3 Mbps for the terminal 10 of a user who makes a contract with the communication carrier A and is viewing a moving image of a data type with intermediate image quality, and set 10 Mbps for the terminal 10 of a user who makes a contract with the communication carrier B and is viewing a moving image of a data type with intermediate image quality. The control unit 103 may set 1 Mbps for the terminal 10 of a user who makes a contract with the communication carrier A and for which a data type is web browsing, and set 2 Mbps for the terminal 10 of a user who makes a contract with the communication carrier B and for which a data type is web browsing.

The control unit 103 may instruct the core network 30 or the base station 20 corresponding to the congestion area to set the upper limit of the communication speed. For example, the control unit 103 may perform control such that the communication speed of the terminal 10 located in the congestion area is the upper limit or less by transmitting an identifier of a cell included in the congestion area and the upper limit of the communication speed to the core network 30 or the base station 20.

### <Summary>

According to the above-described embodiment, it is possible to control a communication speed more appropriately in a congestion area.

### (2) Second Embodiment

As described above, radio waves that are finite resources are used in wireless communication. Therefore, when a large number of terminals perform communication at the same time in the same area, a communication speed per terminal decreases. Therefore, when a user using a terminal knows in advance that a status of wireless communication of an area where the user is located is congested, the user can take measures for the congestion by avoiding use of the wireless communication or changing a period of time in which the user uses the wireless communication. However, such a technique has not yet been provided.

Therefore, an object of the present invention is to provide a technique for notifying a user located in an area where congestion is predicted of a congestion status of communication and the like.

A communication control device according to an aspect of the present invention includes an acquisition unit that acquires traffic data of wireless communication, a detection unit that detects a congestion status of wireless communication including an area where congestion of wireless communication is predicted based on the traffic data, and a notification unit that notifies a terminal located in the area where congestion of wireless communication is predicted of a prediction result of the congestion status of the wireless communication.

According to the present invention, it is possible to notify a user located in an area where congestion is predicted of a congestion status of communication.

### <Functional Block Configuration>

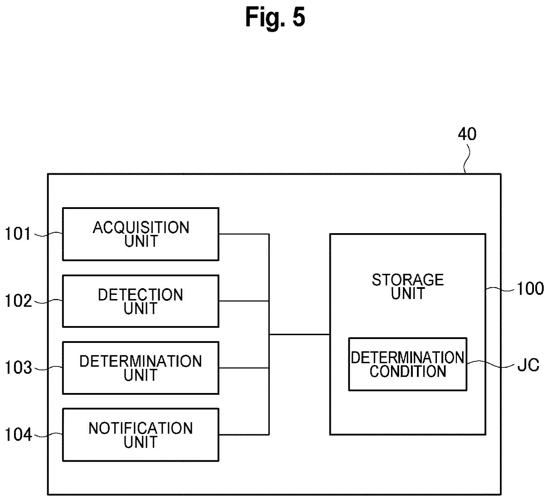

Fig. 5 is a diagram illustrating a functional block configuration example of a communication control device 40. The communication control device 40 includes a storage unit 100, an acquisition unit 101, a detection unit 102, a determination unit 103, and a notification unit 104. The storage unit 100 can be implemented using a storage device 12 included in the communication control device 40. The acquisition unit 101, the detection unit 102, the determination unit 103, and the notification unit 104 can be implemented by causing a processor 11 of the communication control device 40 to execute a program stored in the storage device 12. The program can be stored in a storage medium. The storage medium that stores the program may be a non-transitory computer readable medium. The non-transitory storage medium is not particularly limited, and may be, for example, a storage medium such as a universal serial bus (USB) memory or a compact disc read-only memory (CD-ROM).

The storage unit 100 stores various types of data acquired by the acquisition unit 101. The storage unit 100 stores a determination condition JC for determining a congestion level of wireless communication (details will be described below).

The acquisition unit 101 acquires traffic data regarding a congestion status of wireless communication from a base station 20, a core network 30, and/or an NW management system 50.

Based on the traffic data acquired by the acquisition unit 101, the detection unit 102 detects an area where congestion of wireless communication is predicted. For example, based on the latest traffic data acquired by the acquisition unit 101, the detection unit 102 may detect an area where current congestion is predicted in real time.

The detection unit 102 may detect a congestion status of wireless communication including an area and a period of time in which congestion is predicted based on the traffic data acquired by the acquisition unit 101. That is, the detection unit 102 may detect an area, a period of time, and the like considered to be congested in the future from a tendency of past and/or latest traffic data. The detection unit 102 may detect not only an area and a period of time considered to be congested in the future but also an area and a period of time in which congestion actually occurs.

The determination unit 103 determines whether the predicted congestion level of the wireless communication exceeds a threshold by comparing the determination condition JC stored in the storage unit 100 with the traffic data. Hereinafter, for convenience, an area where the predicted congestion level of the wireless communication exceeds the threshold is referred to as a "congestion prediction area", and a period of time in which the predicted congestion level of the wireless communication exceeds the threshold is referred to as a "congestion prediction period of time".

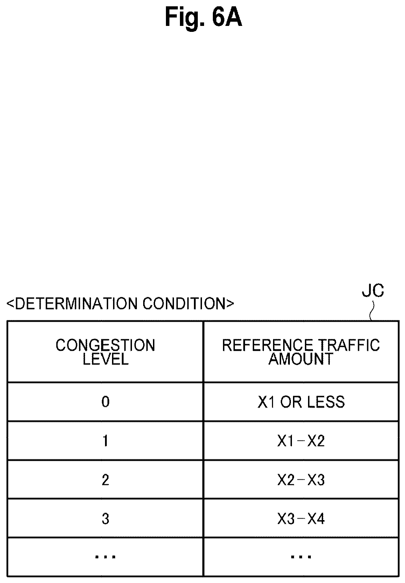

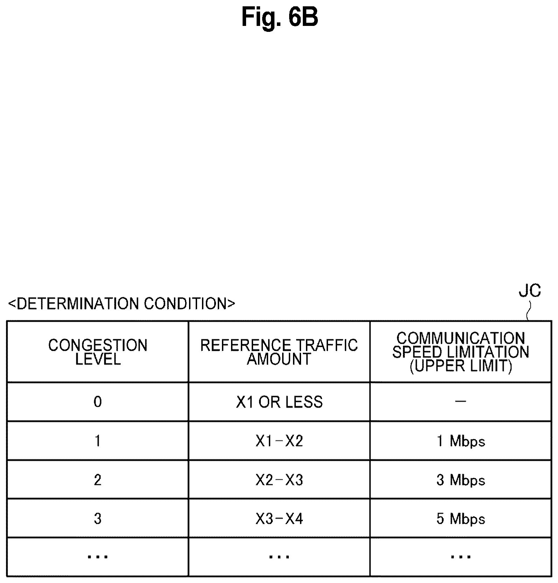

Figs. 6A and 6B are diagrams illustrating an example of the determination condition JC stored in the storage unit 100.

In the example illustrated in Fig. 6A, a congestion level and a reference traffic amount are registered in association with each other as the determination condition JC. For example, when acquired traffic data is a reference traffic amount X1 or less, the congestion level is "0". When the acquired traffic data is within a range between reference traffic amounts X1 and X2, the congestion level is "1". When the acquired traffic data is within a range between reference traffic amounts X2 and X3, the congestion level is "2", and the like. As an example, the congestion level of "2" can be set as a threshold, but it is, of course, not intended to be limited thereto. The upper limit of the communication speed may be set in accordance with the congestion level. For example, as illustrated in Fig. 6B, when the congestion level is "0", no limitation (including an upper limit) is set on the communication speed. When the congestion level is "1", the upper limit of the communication speed is set to 1 Mbps. When the congestion level is "2", the upper limit of the communication speed is set to 3 Mbps, and the like. When the upper limit of the communication speed is set, the determination unit 103 may set the upper limit of the communication speed for the terminal 10 located in the congestion prediction area during the congestion prediction period of time based on a determination result. Here, the upper limit of the communication speed may be set to a value less than the communication speed in a non-congestion area (for example, about 75 Mbps to 100 Mbps in the case of LTE).

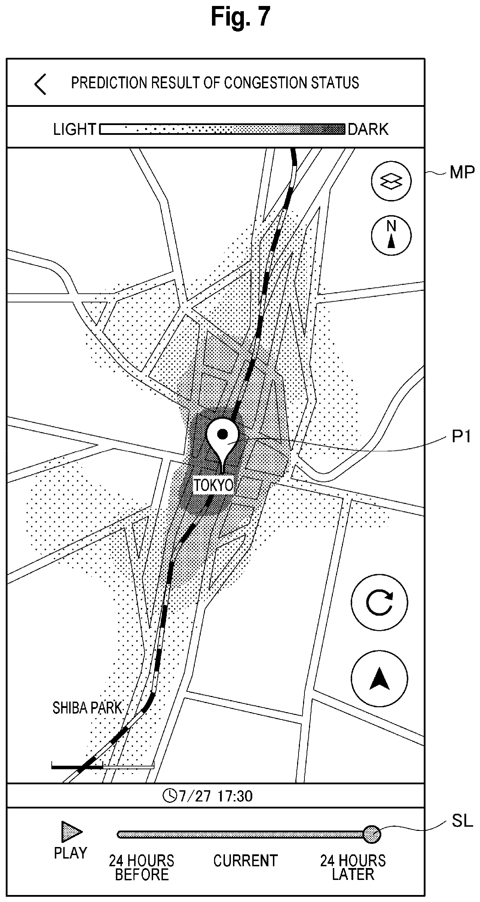

The notification unit 104 notifies the terminal 10 located in the congestion prediction area of the prediction result of the congestion status of the wireless communication. For example, when the detection unit 102 detects the current congestion prediction area in real time, the notification unit 104 notifies the terminal 10 located in the congestion prediction area of the prediction result of the congestion status of the wireless communication during the congestion prediction period of time. On the other hand, when the detection unit 102 predicts a future congestion period of time, the notification unit 104 notifies the terminal 10 located in the congestion prediction area of the prediction result of the congestion status of the wireless communication during the congestion prediction period of time. The notification unit 104 may use a color map MP as illustrated in Fig. 7 when notifying the prediction result of the congestion status of the wireless communication. In the example illustrated in Fig. 7, a position P1 of the terminal 10 is plotted on a map, and surrounding areas (for example, within a radius of OX km) including the congestion prediction area are classified by color for each congestion level. For example, an area at the congestion level of "0" is white, an area at the congestion level "1" is blue, an area at the congestion level "2" is yellow, and an area at the congestion level "3" is orange, and the like. Any type, number, and the like of classification by color can be set in accordance with design or the like. The color map MP may display transition of the congestion level from the past to the future by using a slider SL or the like. As an example, the user may move the slider to the left or right to be able to check the transition of the congestion level from past 24 hours to future 24 hours.

### <Processing Procedure>

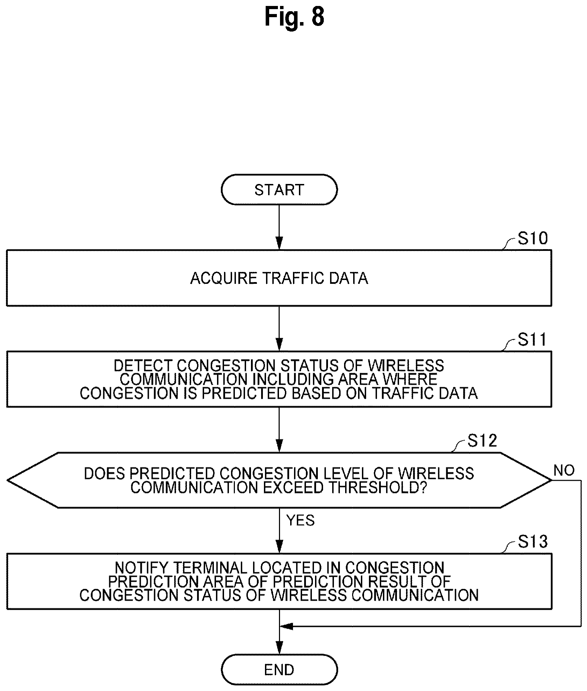

Fig. 8 is a flowchart illustrating an example of a processing procedure executed by the communication control device 40.

In step S10, the acquisition unit 101 acquires traffic data from the core network 30 or the NW management system 50. The traffic data may be data indicating a time transition, that is, a traffic amount from the past to the present at a predetermined interval (for example, every minute or the like). The traffic data may be, for example, data indicating a traffic amount (for example, an uplink data amount and/or a downlink data amount) for each wireless communication area (for example, a cell), data indicating a traffic amount for each base station 20, data indicating the number of terminals 10 locating (existing) in a wireless communication area, data indicating a time transition of an average traffic amount (for example, an average communication speed of uplink data and downlink data) of a plurality of terminals 10 located in the same wireless communication area, and/or data indicating a processing load (a CPU usage rate, a memory usage rate, or the like) of the base station 20. The uplink data means data flowing from the terminal 10 toward the external network, and the downlink data means data flowing from the external network toward the terminal 10.

The acquisition unit 101 may acquire data regarding the regional attribute (hereinafter referred to as "regional attribute data") of the wireless communication area. Examples of the regional attribute include an area around a station, a residential area, an area where there is a shopping center, an area where there are many companies, and an area where a festival is held. The acquisition unit 101 may acquire weather prediction data, event occurrence schedule data, and/or people flow prediction data. The weather prediction data may be, for example, weather forecast. The event occurrence schedule data indicates a date and time and a place of an event to be held in the future. The people flow prediction data is data obtained by predicting a state in which a people flow changes over time.

In step S11, the detection unit 102 detects a congestion status of the wireless communication including an area where congestion is predicted from the traffic data or the like acquired in step S10.

For example, the detection unit 102 may detect a wireless communication area of which a traffic amount from a predetermined period before (although not particularly limited, for example, 10 minutes before) to the present is a predetermined threshold or more as an area where congestion is predicted. For example, the detection unit 102 may detect a wireless communication area where the average communication speed of each terminals 10 of all the terminals 10 located in the same wireless communication area is a predetermined threshold or less as an area where congestion is predicted. The units of the areas where congestion is predicted and which are detected by the detection unit 102 may be units of cells or units including a plurality of cells (for example, units of prefectures and/or units of municipalities).

The detection unit 102 may detect an area where congestion is predicted and a period of time in which congestion is predicted based on the regional attribute data and the traffic data of the wireless communication area acquired by the acquisition unit 101. For example, it is assumed that there is a tendency that a traffic amount from 17:00 to 19:00 of a cell in which there is a shopping center A is twice a traffic amount from 14:00 to 15:00. In this case, the shopping center A is in an area A. When a traffic amount of the area A at the current time (15:00) is taken into account, the traffic amount between 17:00 and 19:00 in the evening exceeds a predetermined threshold. Therefore, the detection unit 102 may determine that the area A corresponds to an area where congestion is predicted between 17:00 and 19:00.

The detection unit 102 may estimate an area where congestion is predicted and a period of time in which congestion is predicted based on at least one of the weather prediction data, the event occurrence schedule data, and the people flow prediction data acquired by the acquisition unit 101, and the traffic data. For example, the traffic amount of the area A is normally less than the predetermined threshold, but the detection unit 102 may determine that the area A from 17:00 to 18:00 corresponds to the area where congestion is predicted in consideration of the event that is held from 17:00 to 18:00. It is assumed that the traffic amount of the area A is normally less than the predetermined threshold, but the number of people is expected to increase in the area A between 9:00 PM on December 31 and 3:00 AM on January 1 in accordance with the people flow prediction data. In this case, the detection unit 102 may determine that the area A from 9:00 PM on December 31 to 3:00 AM on January 1 corresponds to the area where congestion is predicted.

In step S12, the determination unit 103 determines whether the predicted congestion level of the wireless communication exceeds a threshold (for example, level "2" or the like) by comparing the determination condition JC stored in the storage unit 100 with the traffic data. When the predicted congestion level of the wireless communication is the threshold or less (step S12: NO), the above-described process ends. Conversely, when the predicted congestion level of the wireless communication exceeds the threshold (step S12: YES), the area where congestion is predicted is recognized as a congestion prediction area, and the process proceeds to step S13.

In step S13, the notification unit 104 notifies the terminal 10 located in the congestion prediction area of the prediction result of the congestion status of the wireless communication. When the prediction result of the congestion status of the wireless communication is notified of, the color map MP illustrated in Fig. 5 may be used. Each user selects the period of time (for example, a time at which a web meeting is held) in which a communication line is used and a type of communication line (for example, not a wireless communication line but an optical communication line) to be used by checking the color map MP that is displayed on the terminal 10 of the user and indicates the prediction result of the congestion status of the communication line. Accordingly, each user experiences stress-free communication.

### <Summary>

According to the above-described embodiment, it is possible to notify a user located in an area where congestion is predicted of a congestion status of communication.

In the above-described present embodiment, the determination unit 103 notifies the terminal 10 located in the area (that is, the congestion prediction area) in which it is determined that the congestion level of the wireless communication exceeds the threshold of the prediction result of the congestion status of the wireless communication. However, the present invention is not intended to be limited thereto. For example, the terminal 10 located in the area where the congestion of the wireless communication is predicted by the detection unit 102 may be notified of the prediction result of the congestion status of the wireless communication without being involved in the determination unit 103.

### (3) Third Embodiment

As described above, radio waves that are finite resources are used in wireless communication. Therefore, when a large number of terminals perform communication at the same time in the same area, a communication speed per terminal decreases. In this regard, it is conceivable that countermeasures can be taken to avoid congestion of communication by predicting a congestion status of wireless communication and limiting a communication speed of an area where congestion is predicted in advance. However, no technique for clarifying how the communication speed is limited has yet been developed.

Accordingly, an object of the present invention is to control a communication speed more appropriately in an area where congestion is predicted.

A communication control device according to an aspect of the present invention includes: an acquisition unit that acquires traffic data of wireless communication; a detection unit that detects a congestion status of the wireless communication including an area where congestion of the wireless communication is predicted based on the traffic data; and a control unit that sets an upper limit of a communication speed for a terminal located in the area where the wireless communication is congested during a period of time in which the wireless communication is congested. The control unit includes a training unit that trains a model with training data obtained by combining a congestion status of the wireless communication detected in past and the upper limit of the communication speed set at that time and generates the trained model and a determining unit that determines the upper limit of the communication speed to be set by inputting the congestion status detected at this time to the trained model.

According to the present invention, it is possible to control a communication speed more appropriately in an area where congestion is predicted.

### <Functional Block Configuration>

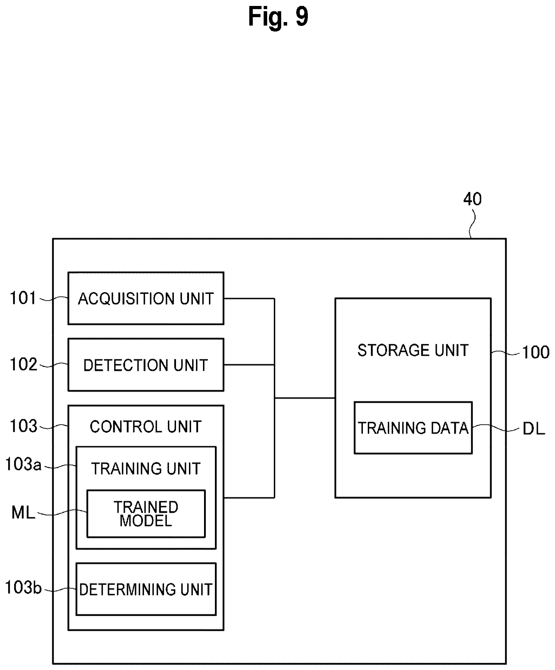

Fig. 9 is a diagram illustrating a functional block configuration example of a communication control device 40. The communication control device 40 includes a storage unit 100, an acquisition unit 101, a detection unit 102, and a control unit 103. The storage unit 100 can be implemented using a storage device 12 included in the communication control device 40. The acquisition unit 101, the detection unit 102, and the control unit 103 can be implemented by causing a processor 11 of the communication control device 40 to execute a program stored in the storage device 12. The program can be stored in a storage medium. The storage medium that stores the program may be a non-transitory computer readable medium. The non-transitory storage medium is not particularly limited, and may be, for example, a storage medium such as a universal serial bus (USB) memory or a compact disc read-only memory (CD-ROM).

The storage unit 100 stores various types of data acquired by the acquisition unit 101. The storage unit 100 stores, as training data DL, a combination of the congestion status of the wireless communication detected in a past predetermined period (for example, OX years or the like) and the upper limit of the communication speed set at that time (details will be described below).

The acquisition unit 101 acquires traffic data regarding a congestion status of wireless communication from a base station 20, a core network 30, and/or a NW management system 50.

Based on the traffic data acquired by the acquisition unit 101, the detection unit 102 detects an area where congestion of wireless communication is predicted. For example, based on the latest traffic data acquired by the acquisition unit 101, the detection unit 102 may detect an area where current congestion is predicted in real time.

The detection unit 102 may detect a congestion status of wireless communication including an area and a period of time in which congestion is predicted based on the traffic data acquired by the acquisition unit 101. That is, the detection unit 102 may detect an area, a period of time, and the like considered to be congested in the future from a tendency of past and/or latest traffic data. The detection unit 102 may detect not only an area and a period of time considered to be congested in the future but also an area and a period of time in which congestion actually occurs.

The control unit 103 includes a training unit 103a and a determining unit 103b, and sets the upper limit of the communication speed for the terminal 10 located in the congestion area during the congestion period of time. For example, when the detection unit 102 detects the current congestion area in real time, the control unit 103 sets the upper limit of the communication speed for the terminal 10 located in the congestion area during the time period in which the detection unit 102 detects that the congestion area is congested. On the other hand, when the detection unit 102 predicts a future congestion period of time, the control unit 103 sets the upper limit of the communication speed for the terminal 10 located in the congestion area during the detected congestion period of time.

The training unit 103a trains the model with the training data DL obtained by combining the congestion status of the wireless communication detected in the past predetermined period (for example, OX years or the like) and the upper limit of the communication speed set at that time, and generates a trained model ML.

The determining unit 103b determines (outputs) the upper limit of the communication speed to be set by inputting the congestion status detected this time to the trained model ML. In this way, by using the upper limit of the communication speed set in the past and the like as the training data, it is possible to set an optimum upper limit of the communication speed in accordance with the congestion status and it is possible to implement an efficient operation of wireless resources.

### <Processing Procedure>

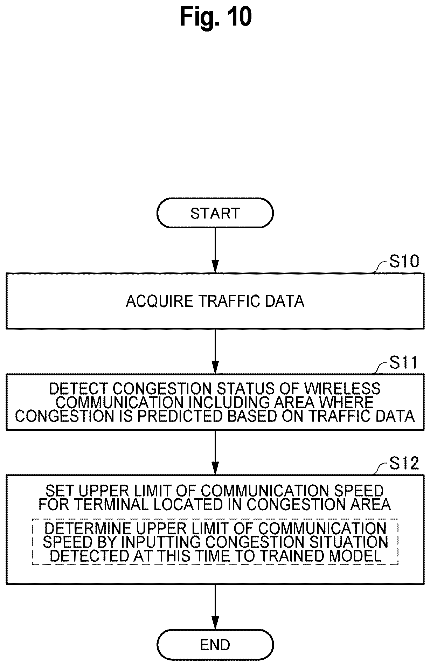

Fig. 10 is a flowchart illustrating an example of a processing procedure executed by the communication control device 40. In the following description, it is assumed that the trained model ML for determining the upper limit of the communication speed has already been generated by the training unit 103a.

In step S10, the acquisition unit 101 acquires traffic data from the core network 30 or the NW management system 50. The traffic data may be data indicating a time transition, that is, a traffic amount from the past to the present at a predetermined interval (for example, every minute or the like). The traffic data may be, for example, data indicating a traffic amount (for example, an uplink data amount and/or a downlink data amount) for each wireless communication area (for example, a cell), data indicating a traffic amount for each base station 20, data indicating the number of terminals 10 locating (existing) in a wireless communication area, data indicating a time transition of an average traffic amount (for example, an average communication speed of uplink data and downlink data) of a plurality of terminals 10 located in the same wireless communication area, and/or data indicating a processing load (a CPU usage rate, a memory usage rate, or the like) of the base station 20. The uplink data means data flowing from the terminal 10 toward the external network, and the downlink data means data flowing from the external network toward the terminal 10.

The acquisition unit 101 may acquire data regarding the regional attribute (hereinafter referred to as "regional attribute data") of the wireless communication area. Examples of the regional attribute include an area around a station, a residential area, an area where there is a shopping center, an area where there are many companies, and an area where a festival is held. The acquisition unit 101 may acquire weather prediction data, event occurrence schedule data, and/or people flow prediction data. The weather prediction data may be, for example, weather forecast. The event occurrence schedule data indicates a date and time and a place of an event to be held in the future. The people flow prediction data is data obtained by predicting a state in which a people flow changes over time.

In step S11, the detection unit 102 detects a congestion status of wireless communication including a period of time in which congestion is predicted together with an area where congestion is predicted from the traffic data or the like acquired in step S10.

For example, the detection unit 102 may detect a wireless communication area where a traffic amount from a predetermined period ago (although not particularly limited, for example, 10 minutes before) to the present is a first threshold or more as an area where congestion is predicted. For example, the detection unit 102 may detect a wireless communication area where an average communication speed of each terminal 10 of all the terminals 10 located in the same wireless communication area is a second threshold or less as a congestion area. Units of the congestion areas detected by the detection unit 102 may be units of cells or a unit including a plurality of cells (for example, units of prefectures and/or units of municipalities). When the traffic amount from the predetermined period ago to the present exceeds a third threshold, the detection unit 102 may detect a predetermined period of time thereafter (for example, from the present to OX hours later) as a period of time in which congestion is predicted.

The detection unit 102 may detect an area where congestion is predicted and a period of time in which congestion is predicted based on the regional attribute data and the traffic data of the wireless communication area acquired by the acquisition unit 101. For example, it is assumed that there is a tendency that a traffic amount from 17:00 to 19:00 of a cell in which there is a shopping center A is twice a traffic amount from 14:00 to 15:00. In this case, the shopping center A is in an area A. When a traffic amount of the area A at the current time (15:00) is taken into account, the traffic amount between 17:00 and 19:00 in the evening exceeds a predetermined threshold. Therefore, the detection unit 102 may determine that the area A corresponds to an area where congestion is predicted between 17:00 and 19:00.

The detection unit 102 may estimate an area where congestion is predicted and a period of time in which congestion is predicted based on at least one of the weather prediction data, the event occurrence schedule data, and the people flow prediction data acquired by the acquisition unit 101, and the traffic data. For example, the traffic amount of the area A is normally less than the predetermined threshold, but the detection unit 102 may determine that the area A from 17:00 to 18:00 corresponds to predicted congestion in consideration of an event that is held from 17:00 to 18:00. It is assumed that the traffic amount of the area A is normally less than the predetermined threshold, but the number of people is expected to increase in the area A between 9:00 PM on December 31 and 3:00 AM on January 1 in accordance with the people flow prediction data. In this case, the detection unit 102 may determine that the area A from 9:00 PM on December 31 to 3:00 AM on January 1 corresponds to the area where congestion is predicted.

The detection unit 102 may detect the degree of congestion (congestion level) in an area where congestion is predicted at a plurality of levels for each congestion area. For example, it is assumed that the degree of congestion is "1" when the traffic amount is A or more and less than B, the degree of congestion is "2" when the traffic amount is B or more and less than C, the degree of congestion is "3" when the traffic amount is C or more and less than D, and the degree of congestion is "4" when the traffic amount is D or more. In this case, when the traffic amount of the area A is B or more or C or more, the detection unit 102 may determine that the area A is an area where congestion is predicted and the congestion degree is "2".

The detection unit 102 may display the estimated congestion area on a display or the like using a color map or the like. To facilitate description, an area where congestion is predicted may be referred to as a "congestion area", and a period of time in which congestion is predicted may be referred to as a "congestion period of time".

In step S12, while the current time corresponds to the congestion period of time estimated in step S11, the control unit 103 sets the upper limit of the communication speed for the terminal 10 located in the area where congestion is predicted as estimated in step S11. When the upper limit of the communication speed is set, the determining unit 103b of the control unit 103 determines the upper limit of the communication speed to be set by inputting the congestion status detected at this time to the trained model ML generated by the training unit 103a.

For example, when the detection unit 102 predicts that the mixed period of time in the congestion area A is a period of time from 10:00 to 12:00, the determining unit 103b of the control unit 103 determines an upper limit of an optimum communication speed for the terminal 10 located in the congestion area A from 10:00 to 12:00 in accordance with a congestion status by using the trained model ML.

When the detection unit 102 detects a congestion area in real time, the control unit 103 sets the upper limit of the communication speed for the terminal 10 located in the congestion area while the detection unit 102 detects that the area is congested. For example, while the detection unit 102 determines that the area B corresponds to the congestion area, the determining unit 103b of the control unit 103 repeats a process of determining the upper limit of the optimum communication speed in accordance with the congestion status for the terminal 10 located in the area B by using the trained model ML. Thereafter, when detection unit 102 determines that the area B no longer corresponds to the congestion area, the control unit 103 releases the setting of the upper limit of the communication speed.

The upper limit of the communication speed determined by the determining unit 103b of the control unit 103 may vary as needed depending on the trained model ML, but may be set to a value less than the communication speed in a non-congestion area (for example, about 75 Mbps to 100 Mbps in the case of LTE), such as a range of 1 Mbps to 10 Mbps.

The determining unit 103b of the control unit 103 may change the upper limit of the communication speed to be determined in accordance with the degree of congestion of the congestion area. For example, the upper limit of the communication speed corresponding to the degree of congestion "1" may be determined within a range of 10 Mbps to 8 Mbps, the upper limit of the communication speed corresponding to the degree of congestion "2" may be determined within a range of 8 Mbps to 5 Mbps, and the upper limit of the communication speed corresponding to the degree of congestion "3" may be determined within a range of 5 Mbps to 1 Mbps.

The determining unit 103b of the control unit 103 may change the upper limit of the communication speed to be determined for the terminal 10 located in the congestion area in accordance with the regional attribute of the area where the terminal 10 is located during the congestion period of time. For example, the determining unit 103b of the control unit 103 may change the upper limit of the communication speed to be determined in accordance with a regional attribute such as an area around a station, an area where there is a shopping mall, an area where a concert is held, and an area where a beer festival is held. As an example, the determining unit 103b of the control unit 103 determines that the upper limit of the communication speed is a value of 10 Mbps or less since it is expected that there are many users viewing moving images around the station, and determines that the upper limit of the communication speed is a value of 5 Mbps or less since it is expected that the number of users is large but a data usage amount per user is not large in the beer festival venue. In this manner, the upper limit of the communication speed to be determined may be changed in accordance with the regional attribute.

The determining unit 103b of the control unit 103 may change the upper limit of the communication speed to be determined for the terminal 10 located in the congestion area in accordance with the data type received or transmitted by the terminal 10 during the congestion period of time. That is, the upper limit of the communication speed determined for each terminal 10 may be changed in accordance with the content of data to be communicated. Examples of the data type include moving image data, music data, web data, SNS data, and data of a specific application.

For example, when a moving image has an intermediate image quality, a data amount is 5 Mbyte per minute. Therefore, theoretically, a communication speed of 83 kbps is sufficient. Accordingly, the determining unit 103b of the control unit 103 may determine the upper limit of the communication speed in the range of 3 Mbps or less for the terminal 10 of the user viewing an intermediate moving image. On the other hand, the upper limit of the communication speed may be determined in the range of 10 Mbps or less for the terminal 10 of the user performing the television conference with a large number of people so that the television conference is stabilized. The upper limit of the communication speed may be determined in a range of 1 Mbps or less for the terminal 10 of a user who is simply performing web browsing. In order to smoothly update a map for the terminal 10 of the user using a map application, the upper limit of the communication speed may be determined in a range of 3 Mbps or less.

The determining unit 103b of the control unit 103 may change the upper limit of the communication speed to be determined for the terminal 10 located in the congestion area in accordance with a communication carrier making a contract with the terminal 10 during the congestion period of time. Here, it is assumed that there are a plurality of communication carriers A and B using the same wireless communication system 1. In this case, the determining unit 103b of the control unit 103 may determine the upper limit of the communication speed in the range of 1 Mbps or less for the terminal 10 of a user who makes a contract with the communication carrier A, and may determine the upper limit of the communication speed in the range of 5 Mbps or less for the terminal 10 of a user who makes a contract with the communication carrier B.

The determining unit 103b of the control unit 103 may arbitrarily combine the communication speed control methods described above. For example, the determining unit 103b of the control unit 103 may determine the upper limit of the communication speed in the range of 3 Mbps or less for the terminal 10 of the user who makes a contract with the communication carrier A and is viewing a moving image of a data type with intermediate image quality, and determine the upper limit of the communication speed in the range of 10 Mbps or less for the terminal 10 of the user who makes a contract with the communication carrier B and is viewing a moving image of a data type with intermediate image quality. The control unit 103 may determine the upper limit of the communication speed in the range of 1 Mbps or less for the terminal 10 of the user who makes a contract with the communication carrier A and for which a data type is web browsing, and determine the upper limit of the communication speed in a range of 2 Mbps or less for the terminal 10 of the user who makes a contract with the communication carrier B and for which a data type is web browsing.

The control unit 103 may instruct the core network 30 or the base station 20 corresponding to the congestion area to set the upper limit of the communication speed. For example, the control unit 103 may perform control such that the communication speed of the terminal 10 located in the congestion area is the upper limit or less by transmitting an identifier of a cell constituting the congestion area and the upper limit of the communication speed to the core network 30 or the base station 20.

According to the above-described embodiment, it is possible to control a communication speed more appropriately in an area where congestion is predicted.

The above-described embodiments are intended to facilitate understanding of the present invention and are not intended to limit the present invention. The flowcharts and sequences described in the embodiments and arrangement, materials, conditions, shapes, sizes, and the like of constituents included in the embodiments can be appropriately changed without being limited to those exemplified. The configurations shown in different embodiments can be partially replaced or combined.

### Reference Signs List

- 1: Wireless communication system
- 10: Terminal
- 11: Processor
- 12: Storage device
- 13: Network IF
- 14: Input device
- 15: Output device
- 20: Base station
- 30: Core network
- 40: Communication control device
- 50: NW management system
- 100: Storage unit
- 101: Acquisition unit
- 102: Detection unit
- 103: Control unit

## Claims

1. A communication control device comprising:
an acquisition unit configured to acquire traffic data of wireless communication;
a detection unit configured to detect an area where the wireless communication is congested based on the traffic data; and
a control unit configured to set an upper limit of a communication speed for a terminal located in the area where the wireless communication is congested during a period of time in which the wireless communication is congested.

2. The communication control device according to claim 1,
wherein, based on the traffic data, the detection unit further predicts the period of time in which the wireless communication is congested.

3. The communication control device according to claim 2, wherein
the acquisition unit acquires data regarding a regional attribute, and
based on the data regarding the regional attribute acquired by the acquisition unit and the traffic data, the detection unit predicts the area where the wireless communication is congested and the period of time in which the wireless communication is congested.

4. The communication control device according to claim 1,
wherein the control unit sets the upper limit of the communication speed for the terminal in accordance with a regional attribute of an area where the terminal is located during the period of time in which the wireless communication is congested.

5. The communication control device according to claim 1,
wherein the control unit sets the upper limit of the communication speed for the terminal in accordance with a data type received or transmitted by the terminal during the period of time in which the wireless communication is congested.

6. The communication control device according to claim 1,
wherein the control unit sets the upper limit of the communication speed for the terminal in accordance with a communication carrier making a contract with the terminal during the period of time in which the wireless communication is congested.

7. The communication control device according to claim 1,
wherein the control unit instructs a core network device or a base station corresponding to the area where the wireless communication is congested to set the upper limit of the communication speed.

8. A communication control method executed by a communication control device, the communication control method comprising:
a step of acquiring traffic data of wireless communication;
a step of detecting an area where the wireless communication is congested based on the traffic data; and
a step of setting an upper limit of a communication speed for a terminal located in the area where the wireless communication is congested during a period of time in which the wireless communication is congested.

9. A program causing a computer to execute:
a step of acquiring traffic data of wireless communication;
a step of detecting an area where the wireless communication is congested based on the traffic data; and
a step of setting an upper limit of a communication speed for a terminal located in the area where the wireless communication is congested during a period of time in which the wireless communication is congested.

10. A communication control device comprising:
an acquisition unit configured to acquire traffic data of wireless communication;
a detection unit configured to detect a congestion status of the wireless communication including an area where congestion of the wireless communication is predicted based on the traffic data; and
a notification unit configured to notify a terminal located in the area where the congestion of the wireless communication is predicted of a prediction result of the congestion status of the wireless communication.

11. The communication control device according to claim 10,
wherein, based on the traffic data, the detection unit detects the congestion status of the wireless communication including a period of time in which congestion is predicted together with the area where the congestion of the wireless communication is predicted.

12. The communication control device according to claim 10, further comprising:
a storage unit configured to store a determination condition for determining a congestion level of the wireless communication; and
a determination unit configured to determine whether a predicted congestion level of the wireless communication exceeds a threshold by comparing the determination condition with the traffic data,
wherein, when the predicted congestion level of the wireless communication exceeds the threshold, the notification unit notifies a terminal located in an area where the congestion level exceeds the threshold of a congestion status of the wireless communication.

13. The communication control device according to any one of claims 10 to 12,
wherein the notification unit notifies of the congestion status of the wireless communication using a color map.

14. A communication control method executed by a communication control device, the communication control method comprising:
a step of acquiring traffic data of wireless communication;
a step of detecting a congestion status of the wireless communication including an area where congestion of the wireless communication is predicted based on the traffic data; and
a step of notifying a terminal located in the area where the congestion of the wireless communication is predicted of a prediction result of the congestion status of the wireless communication.

15. A program causing a computer to execute:
a step of acquiring traffic data of wireless communication;
a step of detecting a congestion status of the wireless communication including an area where congestion of the wireless communication is predicted based on the traffic data; and
a step of notifying a terminal located in the area where the congestion of the wireless communication is predicted of a prediction result of the congestion status of the wireless communication.

16. A communication control device comprising:
an acquisition unit configured to acquire traffic data of wireless communication;
a detection unit configured to detect a congestion status of the wireless communication including an area where congestion of the wireless communication is predicted based on the traffic data; and
a control unit configured to set an upper limit of a communication speed for a terminal located in the area where the wireless communication is congested during a period of time in which the wireless communication is congested,
wherein the control unit includes
a training unit that trains a model with training data obtained by combining a congestion status of wireless communication detected in past and the upper limit of a communication speed set at that time to generate the trained model, and
a determining unit that determines the upper limit of the communication speed to be set by inputting a congestion status detected at this time to the trained model.

17. The communication control device according to claim 16,
wherein, based on the traffic data, the detection unit detects the congestion status of the wireless communication including a period of time in which congestion is predicted together with the area where congestion of the wireless communication is predicted.

18. The communication control device according to claim 17, wherein
the acquisition unit acquires data regarding a regional attribute, and
based on the data regarding the regional attribute and the traffic data acquired by the acquisition unit, the detection unit detects a congestion status of the wireless communication including the area where congestion of the wireless communication is predicted and the period of time in which congestion of the wireless communication is predicted.

19. The communication control device according to claim 16,
wherein the determining unit changes an upper limit of the communication speed to be determined for the terminal in accordance with a regional attribute of an area where the terminal is located during the period of time in which the wireless communication is congested.

20. The communication control device according to claim 16,
wherein the determining unit changes the upper limit of the communication speed to be determined for the terminal in accordance with a data type received or transmitted by the terminal during the period of time in which the wireless communication is congested.

21. The communication control device according to claim 16,
wherein the determining unit changes the upper limit of the communication speed for the terminal in accordance with a communication carrier making a contract with the terminal during the period of time in which the wireless communication is congested.

22. A communication control method executed by a communication control device, the communication control method comprising:
an acquisition step of acquiring traffic data of wireless communication;
a detection step of detecting a congestion status of the wireless communication including an area where congestion of the wireless communication is predicted based on the traffic data; and
a control step of setting an upper limit of a communication speed for a terminal located in the area where the wireless communication is congested during a period of time in which the wireless communication is congested,
wherein the control step further includes
a training step of training a model with training data obtained by combining a congestion status of wireless communication detected in past and an upper limit of a communication speed set at that time to generate the trained model, and
a determination step of determining the upper limit of the communication speed to be set by inputting a congestion status detected at this time to the trained model.

23. A program causing a computer to execute:
an acquisition step of acquiring traffic data of wireless communication;
a detection step of detecting a congestion status of the wireless communication including an area where congestion of the wireless communication is predicted based on the traffic data; and
a control step of setting an upper limit of a communication speed for a terminal located in an area where the wireless communication is congested during a period of time in which the wireless communication is congested,
wherein the control step further includes:
a training step of training a model with training data obtained by combining a congestion status of wireless communication detected in past and an upper limit of a communication speed set at that time to generate the trained model, and
a determination step of determining the upper limit of the communication speed to be set by inputting a congestion status detected at this time to the trained model.
